# EUROPÄISCHE PATENTSCHRIFT

(11) **EP 2 851 122 B1**
(45) Veröffentlichungstag und Bekanntmachung des Hinweises auf die Patenterteilung: **14.10.2015**
(21) Anmeldenummer: 14182892.1
(22) Anmeldetag: 29.08.2014
(51) Int. Cl.: B02C 13/16, B02C 13/288, B02C 13/282, B02C 13/286

(54) **Zerkleinerungsvorrichtung**
Comminuting device
Dispositif de concassage

(30) Priorität: 19.09.2013 DE 102013110352
(43) Veröffentlichungstag der Anmeldung: 25.03.2015
(73) Patentinhaber: PMS Handelskontor GmbH, 20149 Hamburg (DE)
(72) Erfinder: Scharfe, Felix, 20149 Hamburg (DE)
(74) Vertreter: Graf Glück Kritzenberger

(56) Entgegenhaltungen:
- EP-A2- 2 529 835
- DE-A1- 3 341 429
- DE-A1-102005 046 207

## Beschreibung

Die vorliegende Erfindung betrifft eine Zerkleinerungs- bzw. Freilegungsvorrichtung, insbesondere für Metalle und Mineralstoffverbindungen in Erzen (Bergbau), metallhaltige Industrieschlacken, metallhaltige Schlacken der thermischen Abfallverwertung und sonstigen Materialkonglomeraten. In Erzen befinden sich bekannter weise verschiedene Metalle und Mineralstoffverbindungen, die nach heutigem Stand der Technik nur sehr aufwendig von den entsprechenden Erzen getrennt werden können.

Eine effiziente Gewinnung der Metalle wird durch eine totale Freilegung bzw. Trennung aller in den Erzen vorkommenden Materialien erheblich vereinfacht. Beim Verhüttungsprozess der Metalle gelangen durch den Einschmelzungsvorgang immer geschmolzene Metalle (z.B. Fe und Cu) in die Schlacke, die ebenfalls problematisch zurückzugewinnen sind.

In den Schlacken und Aschen der thermischen Abfallverwertung sowie in den Schlacken der Metallerzeugung befinden sich zahlreiche Eisen und Nichteisenmetalle, die in gediegener Form in mineralischen Schlacken eingebunden oder stark verzundert sind. Ein effiziente Rückgewinnung dieser Metalle aus den Materialkonglomeraten ist nur möglich, wenn diese Metalle aus ihren Verbunden/Verzunderungen so aufgeschlossen oder getrennt werden, das sie anschließend durch Magnete oder Nichteisenmetallabscheider aus dem Stoffstrom abgeschieden werden können.

Nach dem Stand der Technik werden derartige Schlacken mit herkömmlichen Hammer- und Prallmühlen zerkleinert und anschließend Magneten und Nichteisenmetallabscheidern zugeführt.

Mit Hammer- und Prallmühlen ist der Aufschluss und die Rückgewinnung von Metallen mit einer Partikelgröße von mehr als 20 mm möglich und auch effizient. Für den Aufschluss kleinerer Metallpartikeln mit diesen Mühlen müssten sehr kleine Spaltabstände, beispielsweise unter 20 mm eingestellt werden, was dann zu einer starken Zunahme der Mahlzerkleinerung zu Lasten der Prallzerkleinerung führen würde. Diese Mahlzerkleinerung hätte zur Folge, dass weiche Nichteisenmetalle so aufgerieben werden dass sie nicht mehr über einen Nichteisenmetallabscheider separiert werden können. Damit ist die Rückgewinnung von kleinen Metallpartikeln, die in den Schlacken in gediegener Form vorliegen, mit den Zerkleinerungseinrichtungen nach dem Stand der Technik nur begrenzt möglich.

Die EP 2 529 835 A2 zeigt eine Zerkleinerungsvorrichtung mit den Merkmalen des Oberbegriffs des Anspruchs 1.

Der Erfindung liegt daher die Aufgabe zugrunde, eine Vorrichtung zu schaffen, mit welcher der mechanische Aufschluss bzw. die Zerkleinerung und/oder Abtrennung von in den Schlacken und Erzen gebundenen gediegenen Metallpartikeln und Mineralstoffverbindungen möglich ist. Die Erfindung soll überdies anwendbar sein auf Materialkonglomerate aus Materialen unterschiedlicher Dichte und/oder Konsistenz.

Diese Aufgabe wird gelöst durch eine Vorrichtung mit den Merkmalen des Anspruchs 1. Vorteilhafte Weiterbildungen der Erfindung sind Gegenstand der Unteransprüche.

Die erfindungsgemäße Zerkleinerungs- und/oder Trennvorrichtung hat eine an sich bekannte Zerkleinerungskammer mit einer Zufuhrseite und einer Auslassseite. Die Zerkleinerungskammer ist von einer vorzugsweise zylindrischen, insbesondere kreiszylindrischen Zerkleinerungskammerwand umgeben, die in der Regel vertikal ausgerichtet ist, wobei sich die Zufuhrseite oben und die Auslassseite unten oder seitlich befindet. Prinzipiell ist es aber auch möglich, die Achse horizontal anzuordnen, wenn die Anlage zur Aufbereitung nur sehr kleiner Materialkonglomerate mittels horizontalem Luftstrom verwendet wird. Ansonsten erfolgt in der vertikalen Anordnung die Materialzufuhr von oben nach unten gravimetrisch und durch einen Lüfterrotor, der über einen eigenen Antrieb verfügt. Die erfindungsgemäße Zerkleinerungsvorrichtung kann zum Trennen von Materialkonglomeraten, jedoch auch nur zum Zerkleinern von Konglomeraten verwendet werden.

Die Zerkleinerungskammer hat in Richtung der Zylinderachse wenigstens zwei, vorzugsweise drei aufeinanderfolgende Abschnitte. In jeden dieser Abschnitte befindet sich jeweils mindestens ein zentral bzw. konzentrisch zur Zerkleinerungskammer angeordneter Rotor, an welchem Schlagwerkzeuge angeordnet sind, die sich zumindest im Betrieb der Vorrichtung radial in die Zerkleinerungskammer hineinerstrecken. Falls als Schlagwerkzeuge Ketten oder bewegliche Schlagwerkzeuge verwendet werden, erstrecken sich diese nur radial in die Zerkleinerungskammer hinein, wenn sich der Rotor mit einer entsprechenden Rotationsgeschwindigkeit dreht. Die Schlagwerkzeuge dienen, eventuell in Verbindung mit späteren noch beschriebenen an sich bekannten Prallleisten an der Zerkleinerungskammerwand, einem Aufbrechen der Materialkonglomerate in noch näher beschriebener Weise.

An der Zufuhrseite ist über der Zerkleinerungskammer ein Aufgabekegel angeordnet, der die Rotorwelle(n) überdeckt, so dass eine gleichmäßige Materialaufgabe allein in den Wirkungsbereich der Schlagwerkzeuge erzielt wird, was für ein gutes Trennungsergebnis wichtig ist. Über dem Aufgabekegel ist ein Einlauftrichter angeordnet, wobei zwischen dem Einlauftrichter und dem Aufgabekegel ein Einlaufbereich gebildet wird, dessen Größe (z.B. Breite d) einstellbar bzw. steuerbar ist. Dies kann z.B. durch eine axiale Verstellbarkeit des Einlauftrichters und/oder Aufgabekegels realisiert werden. Auf diese Weise kann die Zufuhr des Materials im Zusammenwirken mit der der Steuerung eines im Auslassbereich angeordneten Lüfterrotors so gesteuert werden, dass eine gewünschte Verweilzeit der Feinpartikel in der Zerkleinerungsvorrichtung eingestellt wird, womit die Partikelgrößenverteilung des zerkleinerten Gutes und damit auch die Trennungseigenschaften der Zerkleinerungsvorrichtung sehr individuell auf unterschiedliche Materialkonglomerate eingestellt werden können. Der Einlauftrichter kann auch durch eine gleichwirkende Anordnung gebildet sein, die eine Zufuhr des Aufgabegutes auf den Aufgabekegel ermöglicht.

Die Drehrichtung der Rotoren in wenigstens zwei, vorzugsweise allen aufeinander folgenden Abschnitten sind gegenläufig, was zu hohen Zertrümmerungsgeschwindigkeiten zwischen den zu trennenden Partikeln und den Schlagwerkzeugen führt, denn auf diese Weise wird erreicht, dass die Partikel, die durch die Schlagwerkzeuge eines Rotors beschleunigt werden, beim in Materialflussrichtung folgenden Rotor frontal gegen die gegenläufig drehenden Schlagwerkzeuge treffen. Die Aufprallenergie addiert sich somit aus der Partikelgeschwindigkeit und der Geschwindigkeit der Schlagwerkzeuge. Hierdurch wird eine extrem hohe Aufprallenergie der Materialpartikel auf den nachfolgenden Schlagwerkzeugen oder auf den Prallleisten an der Zerkleinerungskammerwand erzielt, was zu einem Aufbrechen der Materialkonglomerate führt, sofern sich darin Materialen unterschiedlicher Dichte und/oder Konsistenz z. B. Elastizität befinden. Schließlich kann die Rotationsgeschwindigkeit der Rotoren erfindungsgemäß zwischen den Abschnitten der Zufuhrseite und Auslassseite der Zerkleinerungskammer unterschiedlich sein. Auf diese Weise wird erzielt, dass die Aufprallenergie der Materialkonglomerate im Bereich zunehmender Partikeldichte in Richtung auf die Auslassseite hin zunehmen kann, da sich dort auch die Rotationsgeschwindigkeiten der Rotoren und damit die Absolutgeschwindigkeit der Schlagwerkzeuge erhöhen.

In axialen Abständen sind Ableitrippen ringartig an der Innenseite der Zerkleinerungskammerwand angeordnet und/oder der Radius der Zerkleinerungskammerwand nimmt von oben nach unten zu, was dazu führt, dass der Partikelstrom nicht entlang der Außenwand der Zerkleinerungskammer entlangströmt, ohne in den Wirkungsbereich der Schlagwerkzeuge zu gelangen. Ein derartiger Bypass-Strom wird somit effizient unterbunden. Diese Ableitrippen sind vorzugsweise im Bereich wenigstens zweier Rotoren oder zwischen den Rotoren an der Zerkleinerungskammerwand angeordnet, wodurch der Materialstrom, der an der Innenseite der Zerkleinerungskammer herunterfällt, wirksam in den Wirkungsbereich der Schlagwerkzeuge gelenkt wird. Vorzugsweise hat die Ableitrippe hierfür eine Oberkante, die sich konisch von außen oben nach innen unten erstreckt, was deren Leitfunktion verbessert.

In Verbindung mit der Zerkleinerungskammer ist eine Luftströmungseinrichtung zum Abführen eines Partikel/Luft-Gemischs aus der Zerkleinerungskammer angeordnet, welche Luftströmungseinrichtung wenigstens einen koaxial zur Achse der Zerkleinerungskammer angeordneten Lüfterrotor aufweist, der auf einer eigenen Welle angeordnet ist, die über einen separaten Lüfterantrieb angetrieben ist, um den Lüfterrotor unabhängig von den Rotoren zu drehen. Dies erlaubt es, das in der Zerkleinerungskammer erzeugten Partikel/Luft-Gemisch in und aus der Zerkleinerungskammer zu führen, wobei vorzugsweise auch die Geschwindigkeit des Lüfters, insbesondere im Zusammenwirken mit der Steuerung der Größe des Einlaufbereichs für eine optimale Trennung des Materialkonglomerats gesteuert werden kann. Durch die Schlagwerkzeuge wird das aufgegebene Gut in der Regel derart zerschlagen, dass eine hohe Staubfraktion auftritt. Wenn in dieser Staubfraktion die wertvollen Bestandteile enthalten sind, kann so der Lüfter auf eine hohe Umdrehungszahl geschaltet werden, womit der "wertvolle" Staub in eine Absetzkammer oder Flotation geführt werden kann, um für eine weitere Aufbereitung gewonnen zu werden. Ist der Staub die eher unerwünschte Fraktion, kann der Lüfter auf eine niedrige Umdrehungszahl geschaltet werden. Auf diese Weise kann eine weitgehend vollständige Abschöpfung der wertvollen Bestandteile der Materialkonglomerate realisiert werden, wobei der Feinstaub entweichen oder einer Staubabscheidung zugeführt werden kann. Es kann des weiteren eine so deutliche Trennung der Komponenten der Materialkonglomerate erzielt werden, wie sie bislang nur mit sehr viel aufwendigeren Verfahren, z.B. chemischen Verfahren, möglich war.

Die Materialpartikel werden weiterhin durch die Luftströmungseinrichtung nach genügender Zerkleinerung aus der Zerkleinerungskammer zwangsweise abgeführt und behindern somit nicht den Zerkleinerungsprozess für größere Partikel. Zum anderen wird sichergestellt, dass die kleinen, teilweise sogar staubförmigen Materialpartikel auch sicher aus der Zerkleinerungskammer in den Aufbereitungsbereich übergeführt werden, wo sie dann von dem Luftstrom durch Abscheider, insbesondere Fliehkraftabscheider, insbesondere Zyklone abgetrennt bzw. abgeschieden werden können. Nach der Abscheidung kann dann ein Verfahrensschritt, z.B. eine Dichtetrennung zur Trennung des Erzgehaltes von der Schlacke durchgeführt werden, um den gewünschten Erzanteil zu erhalten.

Zwischen dem Einlauftrichter und dem Aufgabekegel wird ein Einlaufbereich in Form eines Spaltes mit der Breite d gebildet. Auf diese Weise wird Aufgabegut gleichmäßig in den gesamten Rotationsbereich der Zerkleinerungskammer aufgegeben. Die Bereite des Einlaufbereichs, d.h. der Abstand d zwischen dem Einlauftrichter und dem Aufgabekegel ist einstellbar. Auf diese Weise kann der zugeführte Volumenstrom einfach über die Breite d des Einlaufbereichs gesteuert werden. Zudem kann durch diese Steuerung der Breite d des Einlaufbereichs zwischen Einlauftrichter und Aufgabekegel der maximale zugeführte Konglomeratdurchmesser begrenzt werden, was wiederum der Effizienz der gesamten Anlage zuträglich ist. Über die Steuerung der Breite des Einlaufbereichs kann zudem auch die Luftströmung in der Vorrichtung gesteuert werden. In Verbindung mit der Steuerung des Lüfterrotors durch eine elektronische Steuerung kann somit eine dem Zweck angepasste optimale Partikelströmung eingestellt werden. Die Einstellung des Einlaufbereichs wirkt in idealer Weise mit der individuellen Steuerung des Lüfterrotors zusammen. Hierdurch können die Verweilzeiten von Partikeln in der Zerkleinerungskammer und damit der Zerkleinerungsgrad eingestellt, ja feinreguliert werden.

Zum einfachen Einstellen der Größe des Einlaufbereichs ist vorzugsweise der Einlauftrichter in axialer Richtung verschiebbar gehalten. Diese Lösung ist technisch einfach zu realisieren und ist sehr wirkungsvoll.

Der zwischen dem Einlauftrichter und der Aufgabekegel gebildete Einlaufbereich ist zumindest weitgehend identisch um die zentrale Achse der Zerkleinerungskammer ausgebildet, um eine gleichmäßige Zufuhr und damit Zerkleinerungswirkung im gesamten Rotationsbereich der Zerkleinerungskammer zu garantieren.

In einer vorteilhaften Weiterbildung der Erfindung weist die Vorrichtung eine Steuerung für den Lüfterantrieb auf, und an der Zufuhrseite ist ein Staubsensor angeordnet, wobei der Lüfterantrieb in Abhängigkeit von dem Ausgangssignal des Staubsensors steuerbar ist. Es kann damit erreicht werden, dass der Staub, sofern er wertvolle Komponenten enthält, einer Feinpartikelgewinnungsanlage, z.B. einer Setzkammer oder Flotationskammer zugeführt wird. Andernfalls kann er einem Staubabscheider zugeführt werden, um eine umweltverträgliche Lösung zu realisieren.

Hier ist es vorteilhaft, wenn die Steuerung und der Lüfterantrieb einen Betrieb des Lüfterrotors mit unterschiedlichen Rotationsgeschwindigkeiten erlaubt, und die Rotationsgeschwindigkeit in Abhängigkeit von dem Ausgangssignal des Staubsensors regelbar ist. Die Steuerung der Partikelströmung in der Zerkleinerungskammer ist dann sehr genau regelbar auf die voraussichtlich zu erwartenden Partikelfraktionen.

In einer vorteilhaften Weiterbildung der Erfindung sind die Schlagwerkzeuge an einem Rotor in mehreren Ebenen versetzt zueinander angeordnet. Dies führt zu einer effektiven und gleichmäßigen Zerkleinerung des Aufgabeguts.

In einer vorteilhaften Weiterbildung der Erfindung haben die Rotoren in den von der Zufuhrseite zur Auslassseite aufeinanderfolgenden Abschnitten einen Rotormantel, dessen Radius über die axiale Länge der Zerkleinerungskammer konstant bleibt. Auf diese Weise werden die Rotoren gegen den sich mit hoher Geschwindigkeit bewegenden Partikelstrom geschützt, und der Partikelstrom wird definierte im Bereich der Rotoren begrenzt. In diesem Fall wird vorzugsweise der Rotormantel ebenfalls vom Aufgabekegel überdeckt, so dass der Materialstrom in diesem Bereich verringert wird.

Die Rotoren haben vorzugsweise einen Rotormantel in Form eines Zylinders mit gleichbleibendem Radius. Das heißt: der Radius bzw. die Grundfläche des Zylinders ist in allen Abschnitten gleich. Ein derartiger Rotormantel verhindert zum einen, dass sich Material im Rotor fest hängt. Zum anderen ist ein Zylinder herstellungstechnisch leicht zu realisieren. Der Zylinder kann eine polygone oder runde, z.B. kreisrunde Grundfläche haben. Aus Gründen der leichten Reinigung und Verhinderung von Materialanhaftungen und geringem Verschleiß bietet sich eine kreisrunde Grundfläche des Zylinders an. Bei vorteilhafter polygoner Grundfläche des Zylinders kann ein gewisser Mitnehmereffekt für die Partikel erreicht werden, d.h., dass Partikel, die am Rotormantel herunterfallen, durch die Kanten des Polygons wieder nach Außen in den Wirkungsbereich der Schlagwerkzeuge überführt werden. Die polygone, z.B. quadratische oder sternförmige Grundfläche bietet sich daher an, wenn man eine hohe Zerkleinerungseffizienz in einem verbesserten Zusammenwirken mit den Schlagwerkzeugen erzielen will.

Vorzugsweise enthält der Rotormantel mehrere auswechselbar an dem Rotor gehaltene Rotormantelelemente. Der Rotormantel ist bei der Überführung der Materialpartikel in den radial äußeren Bereich der Zerkleinerungskammer einer gewissen Abnutzung ausgesetzt, so dass eine in Austausch lediglich der Rotormantelelemente wesentlich kostengünstiger ist, als wenn der gesamte Rotor ersetzt werden muss. Der Rotormantel schützt zudem die weiter innen liegenden Teile des Rotors, z.B. Lager.

Vorzugsweise sind an dem Rotormantel axial oder schräg verlaufende Mitnehmerleisten angeordnet, die den Materialstrom vom Rotormantel in Richtung auf den Wirkungsbereich der Schlagwerkzeuge ablenken. Vorzugsweise sind die Mitnehmerleisten, die sich vorzugsweise axial und radial in die Zerkleinerungskammer hineinerstrecken, zumindest am zweiten Rotor, bzw. dem in Materialflussrichtung vorletzten Rotor ausgebildet. Diese Mitnehmerleisten nehmen Materialpartikel mit und beschleunigen sie radial nach außen, so dass dieses Material dann wieder in den Wirkungsbereich der Schlagwerkzeuge gelangt und dort wirksam zerschlagen werden kann.

Während es prinzipiell möglich ist, einen Antrieb für die Rotoren zu verwenden und die gegenläufige Drehrichtung und unterschiedliche Rotationsgeschwindigkeiten über entsprechende Getriebe vorzusehen, ist es vorzuziehen, dass jeder Rotor seinen eigenen Antrieb hat, der unabhängig von den anderen Rotoren betreib- bzw. steuerbar ist. Auf diese Weise können die Rotationsgeschwindigkeiten individuell an unterschiedliche aufzuschließende Materialkonglomerate angepasst werden, was mit einem einzigen Antrieb für alle Rotoren nur aufwändiger zu realisieren wäre.

Vorzugsweise sind die Schlagwerkzeuge lösbar bzw. auswechselbar durch eine am Rotor ausgebildete Befestigungseinrichtung gehalten, wodurch sie leicht ersetzbar sind.

Vorzugsweise enthält die Befestigungseinrichtung zueinander konzentrische Platten, die in axialem Abstand zueinander an dem Rotor festgelegt sind, welche Platten zueinander konzentrische Löcher aufweisen, die von Bolzen durchsetzbar sind, die wiederum Ausnehmungen in den Befestigungsteil der Schlagwerkzeuge durchsetzen. Der Befestigungsteil der Schlagwerkzeuge kann so z.B. eine Ausnehmung oder ein Loch enthalten, welches von dem Bolzen zwischen zwei Platten durchsetzt wird. Der Befestigungsteil des Schlagwerkzeugs kann so z.B. durch wenigstens ein Kettenglied oder eine Perforation gebildet sein. Dies ermöglicht eine einfache lösbare Befestigung der Schlagwerkzeuge an dem Rotor.

Vorzugsweise hat die Befestigungseinrichtung wenigstens zwei axial zueinander versetzte Aufnahmen für die Schlagwerkzeuge. Auf diese Weise können Schlagwerkzeuge axial versetzt aber in Umfangsrichtung überlappend an dem Rotor befestigt werden, was eine hohe Zerkleinerungseffizienz mit sich bringt.

Vorzugsweise sind die Schlagwerkzeuge in bekannter Weise durch Ketten und/oder Schlagleisten gebildet. Diese werden großtechnisch hergestellt und sind günstig am Markt beziehbar.

In einer vorteilhaften Weiterbildung der Erfindung hat wenigstens ein in Aufgaberichtung des Materials folgender Rotor mehr Schlagwerkzeuge hat, als der davor angeordneten Rotor. Damit wird die Häufigkeit von Partikelkollisionen mit Schlagwerkzeugen im unteren Hochenergiebereich, in welchem sich die Rotoren mit hoher Geschwindigkeit drehen, erhöht, was ein effektives Aufbrechen nahezu aller Materialkonglomerate unterstützt.

In einer vorteilhaften Weiterbildung der Erfindung ist an der Auslassseite unter der Zerkleinerungskammer ein ebener Boden angeordnet. Dieser ist vorzugsweise direkt unterhalb des Lüfters angeordnet, so dass sich durch den Lüfter das zerkleinerte Material radial in gewünschte Aufbereitungs- und Entsorgungsberieche abführen lässt. So kann an der Auslassseite der Vorrichtung eine Feinpartikelgewinnungs-anlage, z.B. an eine Setzkammer oder einen Zyklon angeschlossen sein, mit der es möglich ist, "wertvollen" Staub für eine weitere Aufbereitung zu gewinnen. Natürlich kann an der Auslassseite der Vorrichtung auch ein Staubabscheider angeschlossen sein, um z.B. Staub für eine Entsorgung oder Aufbereitung vom Luftstrom abzuscheiden.

In einer vorteilhaften Weiterbildung der Erfindung ist mit der Auslassseite über eine gesteuerte Leitvorrichtung wahlweise die Feinpartikelgewinnungsanlage oder der Staubabscheider anschließbar, was eine einfache Steuerung des Materialflusses entsprechend den individuellen Aufbereitungswünschen unterschiedlicher Partikelfraktionen ermöglicht. Diese Lösung ist besonders einfach mit einem ebenen Boden realisierbar, wie er oben beschrieben ist.

Vorzugsweise ist die Leitvorrichtung durch das Signal des Staubsensors steuerbar. Auf diese Weise kann mit dem Staubsensor sowohl der Einlaufbereich, der Lüfter als auch die Partikelabfuhr gesteuert werden.

Vorzugsweise sind an der Zerkleinerungskammerwand axial oder schräg verlaufende Prallleisten angeordnet, auf die der Materialstrom aufprallt und die den Materialstrom von der Zerkleinerungskammerwand zurück in Richtung auf den Wirkungsbereich der Schlagwerkzeuge ablenken, so dass dieses Material dann wieder in den Wirkungsbereich der Schlagwerkzeuge gelangt und dort wirksam zerschlagen werden kann.

Der Radius der Zerkleinerungskammerwand ist gleichbleibend oder vorzugsweise von der Zufuhrseite zur Auslassseite hin zunehmend, was dazu führt, dass die Partikel sich nicht im Bereich der Zerkleinerungskammerwand ansammeln sondern immer wieder in den Bereich der Schlagwerkzeuge hineinfallen, wo sie weiter aufgebrochen werden. Prinzipiell kann der Radius der Zerkleinerungskammerwand sogar abnehmen, was wegen zunehmender Verstopfungsgefahr jedoch eventuell problematisch ist. Falls der Radius der Zerkleinerungskammerwand nach unten zunimmt, kann die Zunahme kontinuierlich oder in Stufen erfolgen.

Die Zerkleinerungskammerwand enthält, zumindest wenn sie zylindrisch ist, umlaufende Ableitrippen, mit welcher der Materialstrom von dem Zerkleinerungskammerwand in den Wirkungsbereich der Schlagwerkzeuge gelenkt wird. Auf diese Weise wird eine hohe Effizienz bei der Trennung der Materialkonglomerate erzielt. Alternativ oder zusätzlich zu den Ableitrippen kann auch der Durchmesser der Zerkleinerungskammer von der Einlaßseite (oder auch Zufuhrseite) zur Auslassseite hin zunehmen, wodurch ebenfalls der Materialstrom durch die Erdanziehung und Zwangsluftströmung in Richtung Wirkungsbereich der Schlagwerkzeuge gelenkt wird.

Die Kombination der oben dargelegten technischen Merkmale führt somit dazu, dass zum einen die Aufprallenergie der Materialkonglomerate zur Auslassseite hin zunimmt, gleichzeitig die Partikeldichte, was schließlich dazu führen soll, dass im letzten Abschnitt vor dem Ausgang der Zerkleinerungskammer die Materialkonglomerate mit einer hohen Aufprallenergie auf die Schlagwerkzeuge und Prallleisten auftreffen, was zu einem Zersprengen der Materialkonglomerate führt, ohne das diese wie beim Stand der Technik zermahlen werden. Die Größe der in den Materialkonglomeraten erhaltenen Metallpartikeln wird somit nicht reduziert. Die dabei entstehenden feinen Materialpartikel werden durch eine zusätzliche Luftströmungseinrichtung zwangsweise in Richtung auf die Auslassseite der Zerkleinerungskammer in einen Aufbereitungsbereich überführt, in welchem die Materialpartikel von dem Luftstrom abgetrennt werden, womit sich über die Luftströmungseinrichtung die Verweilzeit der feinen Materialpartikel in der Zerkleinerungskammer regeln lässt. Vorzugsweise eigenen sich hierfür Zentrifugalabscheider, d.h. Zyklone.

Die Vorrichtung der Erfindung erlaubt somit eine effektive Zerkleinerung eine Abtrennung bzw. Freilegung z. B. von in Erzen enthaltenen Metallen und Mineralverbindungen oder Fe oder NE-Metallen aus Schlacken oder Verzunderungen, die durch die bekannten Vorrichtungen nach dem Stand der Technik kaum möglich ist. Die Erfindung bedient sich hierbei einer Konstruktion, die zu einer Maximierung der Aufprallenergie der aufzuschließenden Materialkonglomerate auf Schlagwerkzeugen und/oder Prallleisten in der Zerkleinerungskammer führt, ohne dass die Metallteile dabei selbst zerkleinert werden. Somit lassen sich durch die Erfindung auch kleinste Materialteile in Verbundstoffen noch ökonomisch sinnvoll abscheiden. Mit der Erfindung werden somit höchste Aufprallenergien von zu trennenden Materialkonglomeraten auf Schlagwerkzeugen erzielt, die bei nur geringer Mahlwirkung zu einem Aufbrechen und Freilegen der Materialkonglomerate führen.

Ein Aspekt der Erfindung besteht zudem darin, die kinetische Energie möglichst aller Materialpartikel in der Zerkleinerungskammer so zu erhöhen, dass ein Aufprall der Materialpartikel oder Materialkonglomerate mit Schlagwerkzeugen oder Prallleisten bei einer gewissen Aufprallenergie erreicht wird. Die Anmelderin hat herausgefunden, dass eine derartige Aufprallenergie relativ sicher zu einem Aufbrechen der Materialkonglomerate führt, ohne dass die Metallanteile selbst wesentlich zerkleinert werden.

Um die Anzahl der Zusammenstöße von Materialpartikeln bzw. Materialkonglomeraten in der Zerkleinerungskammer zu erhöhen, können an der Zerkleinerungskammerwand Prallleisten ausgebildet sein, oder die Anzahl der Schlagwerkzeuge erhöht werden, die sich axial und radial nach innen erstrecken. Materialpartikel werden nach der Beschleunigung durch Schlagwerkzeuge gegen diese Prallleisten prallen und dann aufbrechen.

Nachfolgend wird die Erfindung anhand einer Zerkleinerungskammer mit drei Abschnitten erläutert. Es soll jedoch klargestellt werden, dass die Erfindung auch mit zwei Abschnitten oder auch vier oder mehr Abschnitten in gleicher Weise funktioniert. Die axialen Zerkleinerungskammerabschnitte entsprechen den axialen Bereichen der Rotoren.

Bei den in Aufgaberichtung des Materials folgenden Rotoren können die Schlagwerkzeuge in einer gleichbleibenden oder unterschiedlichen Anzahl angeordnet sein. So kann z. B. beim ersten Rotor, d.h. Rotor im ersten Abschnitt die Zahl der Schlagwerkzeuge noch geringer sein, da die Aufgabe dieses Abschnitts darin liegt, die Materialpartikel radial nach außen zu befördern, damit sie dort in den Wirkungsbereich der Schlagwerkzeuge der darauffolgenden Rotoren geraten, an welchen bereits mehr Schlagwerkzeuge angeordnet sind als am ersten Rotor. Am ersten Rotor können darüber hinaus Mitnehmerleisten an dem Rotormantel ausgebildet sein, um eine effektive Überführung der Materialpartikel in dem radial außen liegenden Bereich der Zerkleinerungskammer zu realisieren.

Am zweiten Rotor, d.h. Rotor im zweiten Abschnitt können optional deutlich mehr Schlagwerkzeuge angeordnet sein, als am ersten Rotor. Diese Schlagwerkzeuge dienen dazu, die zunehmend in größerer Dichte vorhandenen Materialpartikel nach außen und unten in Richtung auf die Auslassseite zu beschleunigen. Auch der Rotormantel des zweiten Rotors kann Mitnehmerleisten aufweisen oder eine polygone Grundfläche aufweisen, um die Partikel in den radial außen liegenden Bereich zu überführen, wo sie durch die zahlreicheren Schlagzeuge in der Beschleunigungskammer stark in Richtung auf den dritten Rotor beschleunigt werden.

Am dritten Rotor, d.h. am Rotor im dritten Abschnitt vordem Auslass sind vorzugsweise die meisten Schlagwerkzeuge angeordnet, die dazu dienen, die stark beschleunigten Materialpartikel mit einer hohen Wahrscheinlichkeit zu zerschlagen.

Die zunehmende Anzahl von Schlagwerkzeugen in den aufeinanderfolgenden Abschnitten als auch die zunehmende Rotationsgeschwindigkeit in den aufeinanderfolgenden Abschnitten in Verbindung mit der gegenläufigen Drehrichtung führt somit in allen Übergangsbereichen von einem Abschnitt zur nächsten zu einer Maximierung der Aufprallenergie, die zu einem effektiven mechanischen Aufschließen der Materialkonglomerate führt. Die in die Einzelbestandteile zerlegten Materialkonglomerate können später nach dem Abführen aus der Zerkleinerungskammer in an sich bekannten Abscheidungs- oder Zerkleinerungsvorrichtungen, wie z. B. Flotation, Windabscheidern, magnetischen Abscheidern etc. voneinander getrennt werden.

Um eine Maximierung der Aufprallenergie der Metallpartikel in der Zerkleinerungskammer zu realisieren, als auch den Aufprall eines Metallpartikels auf ein Schlagwerkzeug sicherzustellen, hat es sich als vorteilhaft erwiesen, die Schlagwerkzeuge von oben nach unten pro Rotor versetzt (s. Fig.3) anzubringen.

Die Rotorgeschwindigkeiten (Drehzahlen) können in diesem Beispiel in den drei Abschnitten von oben nach unten 800, 1200 und 1500 U/min. betragen, wobei sich die Rotoren im ersten und zweiten Abschnitt gleichsinnig und im zweiten und dritten Abschnitt gegensinnig drehen. Die Absolutgeschwindigkeit der Schlagwerkzeuge im Außenbereich des dritten Abschnitts (Hochgeschwindigkeitsaufprallkammer) liegt damit über 150 m/s. In Verbindung mit der Gegenbeschleunigung der Partikel in der Vorbehandlungskammer und der Beschleunigungskammer lassen sich so Aufprallgeschwindigkeiten von über 200 m/s realisieren.

Die Aufprallenergie errechnet sich durch die Drehgeschwindigkeit eines Rotors im Zusammenhang mit dem Gewicht eines Schlagwerkzeuges und dem Durchmesser der Zerkleinerungskammern. D.h.: Um eine optimale Zerkleinerung bzw. Freilegung (Partikelgröße oder auch Körnung) zu erzielen, werden verschiedene Drehgeschwindigkeiten getestet, um die notwendige Aufprallenergie zu erreichen.

Auf diese Weise werden die Aufprallgeschwindigkeit und damit die Aufprallenergien der Metallpartikel beim Auftreffen auf Schlagwerkzeuge und/oder Prallleisten in der Zerkleinerungskammer innerhalb der physikalisch möglichen und sinnvollen Grenzen maximiert

Die Schlagwerkzeuge sind in an sich bekannter Weise ausgebildet, wie es z. B. durch die DE 10 2005 046 207 gezeigt ist. Sie können so aus Ketten und/oder Schlagleisten oder aus Kombinationen dieser Elemente gebildet sein. Letztlich ist die Ausbildung der Schlagwerkzeuge nicht erheblich für die Erfindung.

Vorzugsweise sind die Schlagwerkzeuge derart an den Rotoren angelenkt, dass sie immer in ihrer horizontalen Lage verbleiben. Es sind deshalb keine hohen Rotationsgeschwindigkeiten (wie bei herkömmlichen Ketten) nötig, um die Schlagwerkzeuge in die horizontale Lage zu bringen. Zudem können hierdurch mehrere Schlagwerkzeuge versetzt an einem Rotor angeordnet werden, weil sie nicht mehr im Stillstand herabhängen und sich dabei verheddern können. Die bewegliche Anordnung der Schlagwerkzeuge derart, dass sie sich nur in einer Ebene achsnormal zur Zylinderachse der Zerkleinerungskammer bewegen können, ist daher höchst vorteilhaft. Es kann auch vorgesehen sein, dass die Schlagwerkzeuge zumindest annähernd starr an den Rotoren befestigt sind.

Selbstverständlich ist die Erfindung nicht auf die Anwendung von Metallpartikeln in Schlacken begrenzt, sondern kann angewandt werden auf alle Arten von Materialkonglomeraten die aus Materialen unterschiedlicher Dichte oder Elastizität besteht.

Falls der Rotor jeden Abschnitts einen eigenen Antrieb aufweist, können die Rotoren über an einem Ende der Zerkleinerungskammer angeordnete Antriebe über zueinander konzentrische Wellen separat angetrieben sein, oder die Antriebe können sich radial innerhalb der Rotormäntel der entsprechenden Rotoren befinden, insbesondere in Form von Außenläufermotoren.

Die Zerkleinerungskammerwand als auch die Schlagwerkzeuge und der Rotormantel bestehen vorzugsweise aus harten schlagfesten Materialen wie aus Metall oder Keramikmetallverbundmaterialien. Der Rotormantel und die Zerkleinerungskammerwand können optional mit Verschleißplatten ausgekleidet sein.

Die Erfindung wird nachfolgend beispielsweise anhand der schematischen Zeichnung beschrieben. In dieser zeigen:
- Fig. 1: einen Längsschnitt durch eine mechanische Zerkleinerungsvorrichtung der Erfindung mit drei Rotoren,
- Fig. 2: eine perspektivische Ansicht einer Achse mit drei Rotoren und einem Lüfterrotor aus Fig. 1.

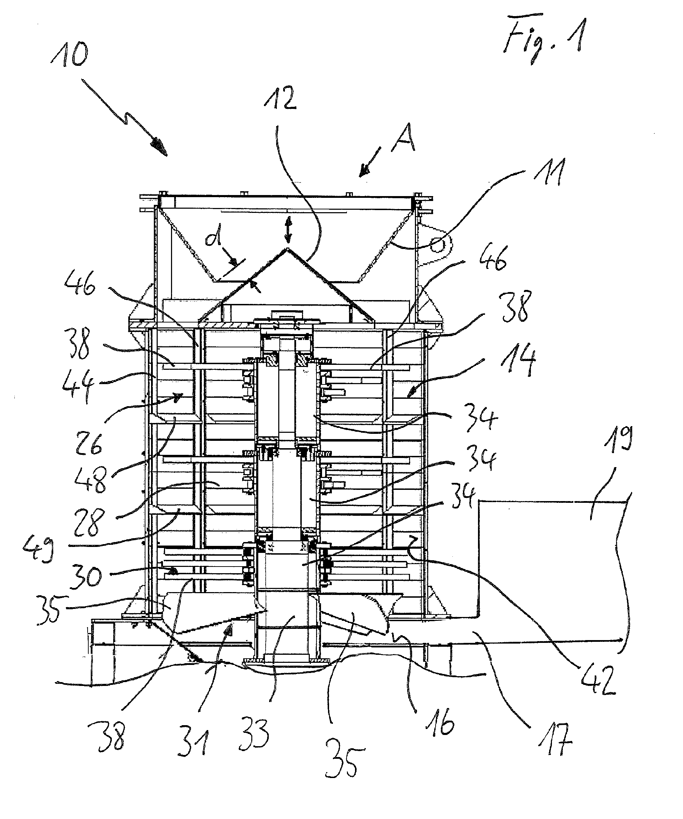

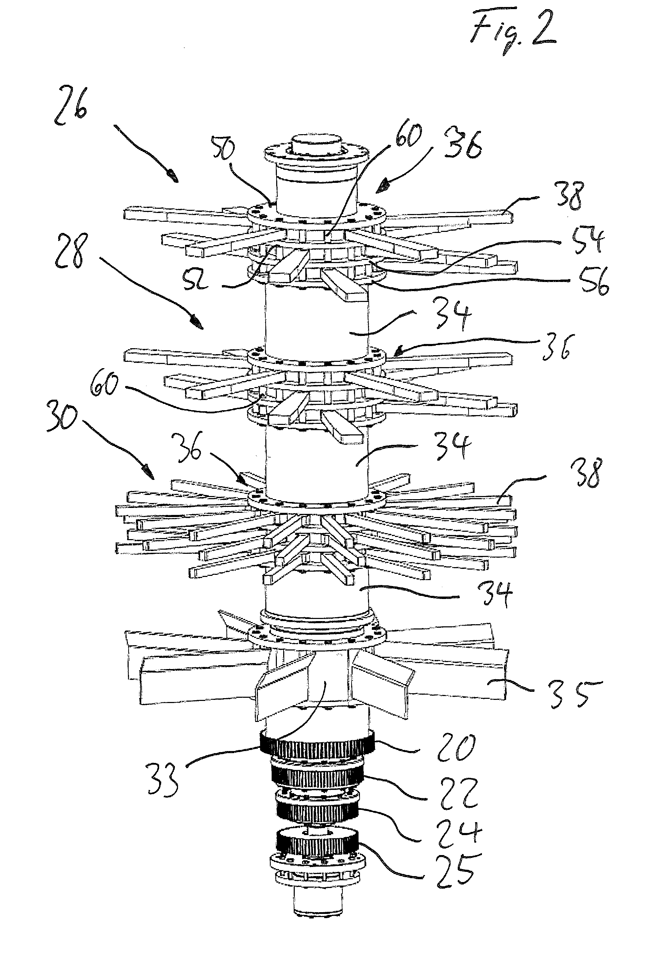

Figur 1 zeigt eine Materialzerkleinerungs- und -trennvorrichtung 10, die einen Einlauftrichter 11 und einen darunter angeordneten Aufgabekegel 12 aufweist, die auf einer kreiszylindrischen Zerkleinerungskammer 14 angeordnet sind. Der Spalt d zwischen dem Einlauftrichter 11 und dem Aufgabekegel 12 ist über eine nicht dargestellte Höhenverstellung des Einlauftrichters in Richtung der Zylinderachse der Zerkleinerungskammer einstellbar. Beide bewirken eine gesteuerte homogene Materialzufuhr in den gesamten Wirkungsbereich der Zerkleinerungsvorrichtung, ohne deren Komponenten zu beschädigen oder abzunutzen, d.h. ein kompletter 360°-Einfüllbereich mit Bezug auf die zylindrische Zerkleinerungskammer. Unter der Zerkleinerungskammer ist ein horizontaler Verteilerboden 16 angeordnet, von dem aus eine Passage 17 in eine Setzkammer 19 führt. Einlauftrichter 11, Aufgabekegel 12, Zerkleinerungskammer 14 und Verteilerboden 16 sind miteinander verbunden und ruhen auf einem in Figur 1 schematisch dargestellten Gestell 18. Die kreiszylindrisch ausgebildete Zerkleinerungskammer 14 ist mit ihrer Achse vertikal angeordnet. Im Zentrum der Zerkleinerungskammer 14 sind drei konzentrische Wellen vorgesehen, mit denen ein erster Rotor 26, ein darunter liegender zweiter Rotor 28 und ein unterster auslassseitiger dritter Rotor 30 verbunden sind. Wie insbesondere auch der persepktivischen Darstellung in Fig. 2 zu entnehmen ist, werden diese drei konzentrischen Wellen werden über separate Antriebseinrichtungen angetrieben, die im vorliegenden Beispiel nicht dargestellt, aber an sich bekannt sind. Die Antriebseinrichtungen erlauben eine separate Ansteuerung der drei Rotoren 26, 28, 30 mittels Zahnrädern 20, 22, 24 mit gewünschter Drehrichtung und gewünschter Drehgeschwindigkeit. Jeder Rotor hat einen kreiszylindrischen Rotormantel 34, dessen Durchmesser bei allen drei Rotoren 26, 28, 30 identisch ist. Jeder Rotor enthält des Weiteren eine Befestigungseinrichtung 36 für Schlagwerkzeuge 38, welche an der Befestigungseinrichtung 36 der Rotoren 26, 28, 30 befestigt sind. Die Schlagwerkzeuge 38 bleiben unabhängig von der Drehung der Rotoren in waagrechter Lage, d.h. quer zur Rotorachse.

Unter den Rotoren 26, 28, 30 ist als Luftströmungseinrichtung ein koaxial zu der Rotorachse rotierender Lüfterrotor 31 angeordnet, der Lüfterblätter 35 aufweist, die auf einer separaten Welle 33 montiert ist, die über einen eigenen Antrieb (nicht dargestellt) angetrieben ist. Somit kann der Lüfterrotor 31 unabhängig von den Rotoren 26, 28, 30 betrieben werden, vorzugsweise auch dessen Rotationsgeschwindigkeit. Der Lüfterrotor 31 wird über ein separates Zahnrad 25 angetrieben.

Unmittelbar unter dem Lüfterrotor 31 ist der Verteilerboden 16 angeordnet, von dem aus die zerkleinerten Partikel mittels des Lüfterrotors 31 über die Passage 17 in die Setzkammer 19 gefördert werden. Stattdessen oder zusätzlich in einem anderen Sektor des Verteilerbodens kann auch über eine weitere Passage 17 eine andere Materialtrenneinrichtung, z.B. eine Schweretrennvorrichtung, eine Rotationstrennvorrichtung, z.B. einen Zyklon angeordnet sein.

In Figur 1 ist des weiteren der Aufbau der Zerkleinerungskammer 14 detailliert zu sehen. Demgemäß enthält die Zerkleinerungskammer 14 eine zylindrische Zerkleinerungskammerwand 42, an deren der Zerkleinerungskammer zugewandten Innenseite optional Verschleißplatten 44 befestigt sind, die die Zerkleinerungskammerwand schützen. Die Verschleißplatten sind vorzugsweise auswechselbar an der Zerkleinerungskammerwand befestigt. Weiterhin sind an der Innenwand der Zerkleinerungskammer 14 in einem Abstand von 45 Grad acht senkrecht verlaufende Prallleisten 46 angeordnet, welche als Aufprallfläche für das durch die Schlagwerkzeuge 38 beschleunigte Material dienen.

Vorzugsweise sind umlaufend auf einer Höhe im Bereich des ersten und zweiten Rotors Ableitrippen 48, 49 vorgesehen, welche insbesondere ringförmig an der Innenseite der Zerkleinerungskammerwand 42 angeordnet sind und dazu dienen, den Materialfluss von der Zerkleinerungskammerwand 42 in den Wirkungsbereich der Schlagwerkzeuge 38 hinein zu leiten.

Die Ausbildung der Rotoren wird besser aus Fig. 2 ersichtlich, die eine perspektivische Darstellung der in Fig.1 zentral eingesetzten Rotoranordnung zeigt.

Die Befestigungseinrichtung 36 jedes Rotors 26, 28, 30 umfasst vorzugsweise vier zueinander konzentrische Scheiben 50, 52, 54, 56, die zueinander konzentrische Löcher 58 haben. Diese konzentrischen Löcher 58 sind von Bolzen 60 durchsetzbar, die Perforationen an dem dem Rotor 26, 28, 30 zugewandten Ende der Schlagwerkzeuge 38 durchsetzen und diese damit am Rotor festlegen. Die Befestigungseinrichtung kann jedoch auch anders ausgebildet sein.

Im vorliegenden Beispiel sind bei jedem Rotor 26, 28, 30 die Schlagwerkzeuge 38 in drei unterschiedlichen Höhenpositionen zwischen den vier Scheiben 50, 52, 54, 56 festlegbar. Wenngleich auch die Rotoren 26, 28, 30 im vorliegenden Ausführungsbeispiel identisch vorgesehen sind, kann es auch vorgesehen sein, dass die weiter unten liegenden Rotoren eine zunehmende Anzahl an Befestigungsmöglichkeiten für die Schlagwerkzeuge aufweisen bzw. dass an den untern Rotoren mehr Schlagwerkzeuge aufgehängt sind als an den oberen Rotoren, wie das im Beispiel dargestellt ist. Zum Beispiel könnten an den unteren Rotoren mehr konzentrische Scheiben und an den oberen Rotoren weniger konzentrische Scheiben ausgebildet sein. In jedem Fall ist es erstrebenswert, dass die Dichte der Schlagwerkzeuge im unteren Trennkammbereich, wo hohe Partikelgeschwindigkeiten vorherrschen, größer ist, womit die Effizienz der Anlage verbessert wird.

Im vorliegenden Ausführungsbeispiel sind als Schlagwerkzeuge 38 Schlagleisten 38 vorgesehen, die an der Befestigungseinrichtung 36 der Rotoren 26, 28, 30 festgelegt sind. Statt Schlagleisten können auch Gliederketten oder anderen an sich geläufige Schlagwerkzeuge verwendet werden. Bei stehendem Rotor hängen die Schlagwerkzeuge in der Regel herunter und werden mit zunehmender Rotationgeschwindigkeit durch die Rotationskraft nach Außen gedrückt, bis sie die in der in der Figur dargestellte Betriebsausrichtung erhalten, in welcher Sie radial vom Rotor 26, 28, 30 nach Außen in Richtung auf die Zerkleinerungskammerwand 42 weisen.

Über die Rotoren 26, 28, 30 kann die Zerkleinerungsmechanik in der Zerkleinerungs- und Trennkammer eingestellt werden, während über den Spalt d zwischen Einlauftrichter und Aufgabekegel als auch über die Steuerung des Lüfterrotors 31 die Strömungsverhältnisse und damit auch die Verweilzeiten der Feinstpartikel in der Zerkleinerungskammer eingestellt werden können. Es ist hierdurch eine auf spezifische Materialkonglomerate zugeschnittene Steuerung der Zerkleinerungs- und -trennvorrichtung möglich, um eine optimale Auftrennung der im Materialkonglomerat enthaltenen Komponenten zu realisieren.

Die Funktionsweise der Materialzerkleinerungsvorrichtung soll nachfolgend kurz erläutert werden:
Zu trennendes Material, z. B. metallhaltige Erze, metallhaltige Industrieschlacken oder Schlacken mit Metalleinschlüssen, werden über den Einlauftrichter 11 und den Aufgabekegel 12 in gesteuerter Weise, nämlich durch Einstellen des Spalts d mittels vertikaler Verstellung des Einlauftrichters 12 der Zerkleinerungskammer 14 der Zerkleinerungsvorrichtung 10 zugeführt. Dort fällt das grobe Material anfangs aufgrund seiner Schwerkraft nach unten fällt und im Zuge der zunehmenden Zerkleinerung in der Zerkleinerungsvorrichtung 10 durch den Lüfterrotor 31 in Richtung auf den Verteilerboden gesaugt wird, wo es vom Verteilerboden 16 in Richtung auf eine weitere Aufbereitung, z.B. eine Setzkammer 19, eine Dichtetrennung oder Rotationstrennung (z.B. Zyklon) geblasen wird.

Die Rotoren 26, 28, 30 drehen sich vorzugsweise jeweils gegenläufig zueinander, d. h. mit alternierender Rotationsrichtung, wobei die Rotationsgeschwindigkeit vorzugsweise von oben nach unten zunehmen kann. Die Rotationsgeschwindigkeit des oberen Rotors kann z. B. 800 U/min betragen, während der mittlere Rotor mit 1200 U/min dreht und der untere Rotor mit 1500 U/min. Das herunterrieselnde Material wird von den Schlagwerkzeugen 38 am obersten ersten Rotor 26 teilweise zerkleinert und teilweise in Umfangsrichtung des Rotors beschleunigt. Das Material trifft entweder auf die Prallleisten 46 oder auf die Schlagwerkzeuge 38 des gegenläufig drehenden mittleren Rotors 28, wo die Materialpartikel nun aufgrund der Vorbeschleunigung durch den oberen Rotor in die Gegenrichtung mit einer höheren Geschwindigkeit auftreffen, womit der Zerkleinerungseffekt deutlich vergrößert wird. Zusätzlich kann auch beim mittleren zweiten Rotor die Rotationsgeschwindigkeit größer als beim ersten Rotor 26 sein, sodass auch hier durch ein wesentlich stärkerer Impact auf die Materialpartikel einwirkt als beim oberen Rotor. Zudem prallen die Materialpartikel auf die senkrecht verlaufenden Prallleisten 46 und werden dort ebenfalls zerkleinert. Material, das im Bereich der Zerkleinerungskammerwand 42 herunterrieselt, wird durch die Ableitrippen 48 wieder in den radial weiter innenliegenden Bereich der Zerkleinerungskammer 14 überführt, wo es dem Wirkungsfeld der Schlagwerkzeuge 38 zugeführt wird. Da die Schlagwerkzeuge an jedem Rotor in unterschiedlichen Höhen (siehe Figur 3) angeordnet sind, wird eine sehr hohe Trefferwahrscheinlichkeit jedes Materialpartikels mit einem Schlagwerkzeug erzielt, was eine gute Effizienz der der Anlage mit sich bringt.

Der unterste dritte Rotor 30 im Auslassbereich kann sich mit der höchsten Geschwindigkeit drehen. Auch hier ist zu beachten, dass die Materialpartikel durch den mittleren zweiten Rotor 28 eine stärkere Beschleunigung in Gegenrichtung erhalten haben, sodass die Partikel nun mit einer entsprechend erhöhten Gegengeschwindigkeit auf den gegenläufig drehenden unteren Rotor 30 auftreffen. Vorzugsweise sind im Bereich des unteren Rotors 30 die meisten Schlagwerkzeuge 38 angeordnet, so dass hier eine hohe Wahrscheinlichkeit von Zusammenstößen der Partikel mit Schlagwerkzeugen 30 bzw. mit den senkrechten Prallleisten 46 erzielt wird. Dies führt zu einer sehr effektiven Materialzerkleinerung.

Die Erfindung ist nicht auf das vorliegende Ausführungsbeispiel begrenzt sondern Variationen sind innerhalb des Schutzbereichs der nachfolgenden Ansprüche möglich.

Mit der Erfindung werden sehr hohe Aufprallenergien von zu trennenden Materialkonglomeraten auf den Schlagwerkzeugen erzielt, wobei die zerschlagenen Partikel wirkungsvoll in eine weitere Aufbereitung überführt werden können. Die Materialtrennung lässt sich zudem über die wirkungsvolle Regelung des Materialstroms, insbesondere des Feinstpartikelstroms steuern.

Insbesondere können die Anzahl und die Verteilung der Schlagwerkzeuge von dem dargestellten Beispiel abweichen. Es können unterschiedliche Schlagwerkzeuge wie Ketten und Schlagleisten verwendet werden. Im Bereich des untersten Rotors können sehr viel mehr Schlagwerkzeuge über den Umfang verteilt werden als in den darüberliegenden Bereichen. Dies führt im Bereich des dritten Abschnitts zu einer erhöhten Wahrscheinlichkeit von Zusammenstößen.

Die Zerkleinerungskammerwand kann einen Sektor haben, der zu öffnen ist, um damit z.B. für Wartungsarbeiten Zugang zur Zerkleinerungskammer zu ermöglichen. Der Austausch von Verschleißteilen, wie der Schlagwerkzeuge 38 oder der Verschleißplatten 44 kann so stark vereinfacht werden.

## Patentansprüche

1. Vorrichtung (10) zum mechanischen Zerkleinern von Materialkonglomeraten aus Materialien mit unterschiedlicher Dichte und/oder Konsistenz,
umfassend eine Zerkleinerungskammer (14) mit einer Zufuhrseite und einer Auslassseite, welche Zerkleinerungskammer von einer insbesondere kreisrunden zylindrischen und/oder kegelförmig nach unten aufgeweiteten Zerkleinerungskammerwand (42) umgeben ist und wenigstens zwei in axialer Richtung aufeinanderfolgende Abschnitte aufweist, in denen jeweils mindestens ein Rotor (26, 28, 30) koaxial zur Zerkleinerungskammer angeordnet ist, wobei jeder Rotor eine Rotorwelle und sich zumindest im Betrieb zumindest weitgehend radial in die Zerkleinerungskammer erstreckende Schlagwerkzeugen (38) aufweist,
wobei die Drehrichtung der Rotoren (26, 28, 30) in wenigstens zwei aufeinanderfolgenden Abschnitten gegenläufig sind,
in axialen Abständen sind Ableitrippen (48) ringartig an der Innenseite der Zerkleinerungskammerwand angeordnet und/oder der Radius der Zerkleinerungskammerwand (42) nimmt von oben nach unten zu, **dadurch gekennzeichnet, dass** an der Zufuhrseite über der Zerkleinerungskammer (14) ein Aufgabekegel (12) angeordnet ist, der den Zentralbereich der Rotoren überdeckt, dass über dem Aufgabekegel (12) ist ein Einlauftrichter (11) angeordnet ist, wobei zwischen dem Einlauftrichter und dem Aufgabekegel ein Einlaufbereich gebildet wird, dessen Größe (d) einstellbar ist, und
dass in Verbindung mit der Zerkleinerungskammer eine Luftströmungseinrichtung zum Führen eines in der Zerkleinerungskammer erzeugten Partikel/Luft-Gemischs angeordnet ist, welche Luftströmungseinrichtung wenigstens einen koaxial zur Achse der Zerkleinerungskammer angeordneten Lüfterrotor (31) aufweist, der eine eigene Welle (33) aufweist, die über einen eigenen Lüfterantrieb angetrieben (25) ist, um den Lüfterrotor unabhängig von den Rotoren zu drehen.

2. Vorrichtung nach Anspruch 1, **dadurch gekennzeichnet, dass**, und dass der Abstand (d) zwischen dem Einlauftrichter und dem Aufgabekegel einstellbar ist.

3. Vorrichtung nach Anspruch 2, **dadurch gekennzeichnet, dass** der Einlauftrichter (11) koaxial zur zentralen Achse der Zerkleinerungskammer in axialer Richtung verschiebbar angeordnet ist.

4. Vorrichtung nach Anspruch 2 oder 3, **dadurch gekennzeichnet, dass** der zwischen Einlauftrichter (11) und der Aufgabekegel (12) gebildete Einlaufbereich zumindest weitgehend identisch um die zentrale Achse der Zerkleinerungskammer (14) ausgebildet ist.

5. Vorrichtung nach einem der vorhergehenden Ansprüche, **dadurch gekennzeichnet, dass** sie eine Steuerung für den Lüfterantrieb aufweist, und dass an der Zufuhrseite ein Staubsensor angeordnet ist, und der Lüfterantrieb in Abhängigkeit von dem Ausgangssignal des Staubsensors steuerbar ist.

6. Vorrichtung nach Anspruch 5, **dadurch gekennzeichnet, dass** die Steuerung und der Lüfterantrieb einen Betrieb des Lüfterrotors (31) mit unterschiedlichen Rotationsgeschwindigkeiten erlaubt, und dass die Rotationsgeschwindigkeit in Abhängigkeit von dem Ausgangssignal des Staubsensors regelbar ist.

7. Vorrichtung nach einem der vorhergehenden Ansprüche, **dadurch gekennzeichnet, dass** die Schlagwerkzeuge (38) an einem Rotor in mehreren Ebenen versetzt zueinander angeordnet sind.

8. Vorrichtung nach einem der vorhergehenden Ansprüche, **dadurch gekennzeichnet, dass** die Rotoren (26, 28, 30) in den von der Zufuhrseite zur Auslassseite aufeinanderfolgenden Abschnitten einen Rotormantel (34) haben, dessen Radius über die axiale Länge der Zerkleinerungskammer konstant bleibt.

9. Vorrichtung nach einem der vorhergehenden Ansprüche, **dadurch gekennzeichnet, dass** jeder Rotor (26, 28, 30) einen eigenen Antrieb hat, der unabhängig von den anderen Rotoren steuerbar ist.

10. Vorrichtung nach einem der vorhergehenden Ansprüche, **dadurch gekennzeichnet, dass** jeder Rotor (26, 28, 30) eine Befestigungseinrichtung (36) für eine lösbare Befestigung der Schlagwerkzeuge (38) aufweist.

11. Vorrichtung nach einem der vorhergehenden Ansprüche, **dadurch gekennzeichnet, dass** ein in Aufgaberichtung des Materials folgender Rotor (28, 30) mehr Schlagwerkzeuge hat, als der davor angeordneten Rotor (26, 28).

12. Vorrichtung nach einem der vorhergehenden Ansprüche, **dadurch gekennzeichnet, dass** an der Auslassseite unter der Zerkleinerungskammer ein ebener Verteilerboden (16) angeordnet ist.

13. Vorrichtung nach einem der vorhergehenden Ansprüche, **dadurch gekennzeichnet, dass** an der Zerkleinerungskammerwand axial oder schräg verlaufende Prallleisten (46) angeordnet sind.

## Claims

1. Device (10) for mechanically comminuting material conglomerates consisting of materials of varying density and/or consistency,
comprising a comminution chamber (14) having a supply side and a discharge side, which comminution chamber is enclosed by an, in particular circular cylindrical and/or conical, downwardly widened comminution chamber wall (42) and has at least two portions in succession in the axial direction, in each of which at least one rotor (26, 28, 30) is arranged coaxial with the comminution chamber, each rotor having a rotor shaft and having striking tools (38) which extend substantially radially into the comminution chamber at least during operation, the rotors (26, 28, 30) having opposite directions of rotation in at least two successive portions, dissipation ribs (48) being arranged annularly on the inside of the comminution chamber wall at axial intervals and/or the radius of the comminution chamber wall (42) increasing from top to bottom, **characterised in that** a delivery cone (12) is arranged above the comminution chamber (14) on the supply side and covers the central region of the rotors,
**in that** an inlet funnel (11) is arranged above the delivery cone (12), an inlet region of adjustable size (d) being formed between the inlet funnel and the delivery cone, and
**in that** an air flow device for guiding a particle/air mixture produced in the comminution chamber is arranged connected to the comminution chamber, which air flow device has at least one fan rotor (31), which is arranged coaxial with the axis of the comminution chamber and has its own shaft (33), which is driven by its own fan drive so as to rotate the fan rotor independently of the rotors.

2. Device according to claim 1, **characterised in that** and **in that** the distance (d) between the inlet funnel and the delivery cone can be adjusted.

3. Device according to claim 2, **characterised in that** the inlet funnel (11) is arranged coaxial with the central axis of the comminution chamber so as to be displaceable in the axial direction.

4. Device according to claim 2 or 3, **characterised in that** the inlet region formed between the inlet funnel (11) and the delivery cone (12) is formed at least substantially identically about the central axis of the comminution chamber (14).

5. Device according to any of the preceding claims, **characterised in that** it has a control system for the fan drive, and **in that** a dust sensor is arranged on the supply side, and the fan drive can be controlled as a function of the output signal of the dust sensor.

6. Device according to claim 5, **characterised in that** the control system and the fan drive allow operation of the fan rotor (31) at different rotational speeds, and **in that** the rotational speed can be controlled as a function of the output signal of the dust sensor.

7. Device according to any of the preceding claims, **characterised in that** the striking tools (38) are arranged offset from one another in a plurality of planes.

8. Device according to any of the preceding claims, **characterised in that**, in the portions in succession from the supply side to the outlet side, the rotors (26, 28, 30) have a rotor casing (34), the radius of which remains constant over the axial length of the comminution chamber.

9. Device according to any of the preceding claims, **characterised in that** each rotor (26, 28, 30) has its own drive which is controllable independently of the other rotors.

10. Device according to any of the preceding claims, **characterised in that** each rotor (26, 28, 30) has a fastening device (36) for releasably fastening the striking tools (38).

11. Device according to any of the preceding claims, **characterised in that** a rotor (28, 30) downstream in the delivery direction of the material has more striking tools than the rotor (26, 28) arranged upstream therefrom.

12. Device according to any of the preceding claims, **characterised in that** a planar distributor plate (16) is arranged below the comminution chamber on the outlet side.

13. Device according to any of the preceding claims, **characterised in that** axially or obliquely extending deflector strips (46) are arranged on the comminution chamber wall.

## Revendications

1. Dispositif (10) pour le broyage mécanique de matières conglomérées constituées matières de densités et/ou de consistances différentes,
comprenant une chambre de broyage (14) comportant un côté alimentation et un côté évacuation, laquelle chambre de broyage est entourée par une paroi de la chambre de broyage (42) en particulier de forme cylindrique circulaire et/ou de forme conique évasée vers le bas et présente au moins deux sections successives dans la direction axiale, dans lesquelles respectivement au moins un rotor (26, 28, 30) est disposé coaxialement à la chambre de broyage, chaque rotor présentant un arbre de rotor et des outils de percussion (38) s'étendant au moins sensiblement radialement dans la chambre de broyage au moins pendant le fonctionnement, le sens de rotation des rotors (26, 28, 30) étant opposé dans au moins deux sections successives,
des ailettes d'évacuation (48) étant disposées à distances axiales de manière annulaire sur le côté intérieur de la paroi de la chambre de broyage et/ou le rayon de la paroi (42) de la chambre de broyage augmentant du haut vers le bas, **caractérisé par le fait qu'**un cône d'alimentation (12), qui recouvre la zone centrale des rotors, est disposé côté alimentation au-dessus de la chambre de broyage (14),
qu'une trémie d'entrée (11) est disposée au-dessus du cône d'alimentation (12), une zone d'entrée étant formée entre la trémie d'entrée et le cône d'alimentation, dont la dimension (d) est réglable, et
qu'un dispositif de courant d'air est disposé en communication avec la chambre de broyage pour guider un mélange de particules/d' air généré dans la chambre de broyage, lequel dispositif de courant d'air présente au moins un rotor de ventilateur (31) disposé coaxialement à l'axe de la chambre de broyage qui comporte son propre arbre (33) qui est entraîné par son propre entraînement de ventilateur (25) pour faire tourner le rotor du ventilateur indépendamment des rotors.

2. Dispositif selon la revendication 1, **caractérisé par le fait que** la distance (d) entre la trémie d'entrée et le cône d'alimentation est réglable.

3. Dispositif selon la revendication 2, **caractérisé par le fait que** la trémie d'entrée (11) est disposée coulissante dans la direction axiale coaxialement à l'axe central de la chambre de broyage.

4. Dispositif selon la revendication 2 ou 3, **caractérisé par le fait que** la zone d'entrée formée entre la trémie d'entrée (11) et le cône d'alimentation (12) est réalisée au moins de manière largement identique autour de l'axe central de la chambre de broyage (14).

5. Dispositif selon l'une des revendications précédentes, **caractérisé par le fait qu'**il présente une commande pour l'entraînement de ventilateur, et qu'un détecteur de poussières est disposé côté alimentation, et l'entraînement de ventilateur peut être commandé en fonction du signal de sortie du détecteur de poussières.

6. Dispositif selon la revendication 5, **caractérisé par le fait que** la commande et l'entraînement de ventilateur permet au rotor de ventilateur (31) de fonctionner à différentes vitesses, et que la vitesse de rotation est réglable en fonction du signal de sortie du détecteur de poussières.

7. Dispositif selon l'une des revendications précédentes, **caractérisé par le fait que** les outils de percussion (38) sont disposés au niveau d'un rotor en plusieurs plans et décalés les uns par rapport aux autres.

8. Dispositif selon l'une des revendications précédentes, **caractérisé par le fait que** les rotors (26, 28, 30) ont une enveloppe de rotor (34), dont le rayon reste constant sur la longueur axiale de la chambre de broyage, dans les sections successives du côté alimentation au côté évacuation.

9. Dispositif selon l'une des revendications précédentes, **caractérisé par le fait que** chaque rotor (26, 28, 30) a un propre entraînement qui peut être commandé indépendamment des autres rotors.

10. Dispositif selon l'une des revendications précédentes, **caractérisé par le fait que** chaque rotor (26, 28, 30) présente un dispositif de fixation (36) pour une fixation amovible des outils de percussion (38).

11. Dispositif selon l'une des revendications précédentes, **caractérisé par le fait qu'**un rotor (28, 30) suivant dans la direction d'alimentation des matières a plus d'outils de percussion que le rotor (26, 28) disposé précédemment.

12. Dispositif selon l'une des revendications précédentes, **caractérisé par le fait qu'**un fond de dispersion (16) plat est disposé côté évacuation sous la chambre de broyage (14).

13. Dispositif selon l'une des revendications précédentes, **caractérisé par le fait que** des barres d'impact (46) s'étendant axialement ou obliquement sont disposées au niveau de la paroi de chambre de broyage.
